(19) Europäisches Patentamt
European Patent Office
Office européen des brevets

(11) **EP 2 562 560 A1**

(12) **DEMANDE DE BREVET EUROPEEN**

(43) Date de publication:
**27.02.2013 Bulletin 2013/09**

(51) Int Cl.:
***G01S 19/21*** (2010.01)　　　***G01S 19/08*** (2010.01)

(21) Numéro de dépôt: **12181743.1**

(22) Date de dépôt: **24.08.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **24.08.2011  FR 1102584**

(71) Demandeur: **Thales**
**92200 Neuilly Sur Seine (FR)**

(72) Inventeur: **Bardout, Yves**
**31400 Toulouse (FR)**

(74) Mandataire: **Dudouit, Isabelle**
**Marks & Clerk France**
**Immeuble Visium**
**22, avenue Aristide Briand**
**94117 Arcueil Cedex (FR)**

(54) **Procédé et système de détection de fraude d'informations de position d'un dispositif mobile**

(57)　Procédé pour authentifier la position $P_1$ (t) d'un élément mobile (10), un élément mobile comprenant au moins un récepteur GNSS, i, ayant une fonction d'estimer la position $P_1$ (t) de cet élément mobile (10), à partir de signaux dits « authentique » de la constellation GNSS, ledit récepteur étant potentiellement affecté par des signaux falsifiés, ce procédé étant caractérisé en ce qu'il comporte en combinaison au moins les étapes suivantes :

● déterminer au moins une donnée (21) associée à la position $P_i$ d'un récepteur GNSS, i,

● transmettre et mémoriser ces données (21),

● choisir un échantillon spécifique Ech($P_i$) de données associées aux positions d'autres récepteurs, pertinent pour l'authentification de cette position $P_i$,

● agréger plusieurs données (22) associées à la position de plusieurs récepteurs GNSS appartenant à un ensemble Ech($P_i$), sur une taille d'échantillon et une période de temps supérieur à des seuils donnés, afin d'obtenir une donnée statistique significative (25) caractéristique du signal authentique,

● déterminer au moins un indicateur de cohérence Ic ($P_i$), (26), représentant une évaluation de la vraisemblance de la position $P_i$, en comparant la donnée (21) associée audit récepteur i et la donnée statistique (25) issue de l'ensemble Ech($P_i$) de récepteurs k sur un intervalle de temps contenant au moins une position Pi,

● authentifier (27) la position $P_i$ dudit élément mobile (10) en utilisant un ou plusieurs desdits indicateurs de cohérence Ic($P_i$) dans une fonction de décision d'authenticité, ou lever une suspicion de fraude de la part de l'utilisateur de ce récepteur i, en ce qui concerne la position $P_i$.

FIG.1

**Description**

L'objet de la présente invention concerne un procédé et un système pour authentifier la position GNSS, acronyme venant de l'expression anglo-saxonne « Global Navigation Satellite Systems », d'un élément ou dispositif mobile. Elle vise à détecter non pas le brouillage mais le leurrage (l'usurpation d'émetteur plus connue sous le terme anglo-saxon "spoofing"), et s'applique par exemple au domaine des systèmes de télépéage routeur, autoroutier, urbain et à tout autre système de surveillance ou de paiement géo localisé.

Un élément mobile correspond, par exemple, à une personne ou un animal, un véhicule ou encore un objet quelconque.

Les terminaux électroniques mobiles mettant en oeuvre des applications requérant des informations sur leur positionnement géographique comportent des moyens pour estimer le plus précisément leur position. Pour cela, des systèmes de géo-localisation par satellites sont communément utilisés, ces systèmes étant désignés par l'acronyme GNSS. Un exemple de système GNSS est le système GPS acronyme anglo-saxon de Global Positioning System.

L'intégrité des positions est un besoin fort dans une application du positionnement critique d'un point de vue légal (système de paiement à l'usage : assurance, parking et réseau routier notamment), ou une application judiciaire (bracelet électronique ou filatures) tout comme dans une application critique du point de vue sécurité des biens (suivi de containers), sécurité de l'utilisateur (assistance à la conduite).

Les équipements utilisés dans des systèmes mettant en oeuvre ce type d'applications sont habituellement inviolables et utilisent des moyens de communication sécurisés. Toutefois le lien radio avec les satellites est un signal ouvert et vulnérable, à moins d'utiliser les signaux de GNSS cryptés qui ne sont pas accessibles à ces marchés du fait de la diffusion et de la gestion des clés d'accès.

Il est par conséquent possible qu'un utilisateur non coopératif ou une personne malintentionnée induisent de fausses positions dans un récepteur, même sans s'immiscer dans l'équipement embarqué (OBU ou On Board Unit), ceci avec un équipement à bas coût de type récepteur régénérateur, recouvrant l'antenne du récepteur, et facile à mettre en oeuvre subrepticement. Contrairement aux équipements de brouillage ou de leurrage émettant sur une zone, attaquant le service aux utilisateurs dans cette zone, ceux-ci n'affecte qu'un récepteur (celui de l'utilisateur non-coopératif. Des stratégies plus ou moins complexes peuvent être implémentées dans un récepteur-régénérateur pour injecter un signal GNSS correspondant à la trajectoire voulue pour contourner l'application : par exemple pour éviter la génération d'une alerte dans un équipement de surveillance, comme le bracelet électronique ou les évènements de tarification déclenchés par le passage de portes virtuelles, dans les applications de paiement à l'usage, ceci tout en minimisant le risque de découverte. Les systèmes envisagés pour ces applications ne permettent pas à ce jour de déjouer de telles fraudes.

La solution typique de tarification est basée sur le passage de portique virtuel ou en anglo-saxon « virtual gate » ou le positionnement dans une zone payante (un parking, un centre ville). La vérification du fonctionnement des équipements de véhicule est faite statistiquement sur des points de contrôle fixes ou mobiles, où la cohérence des évènements de tarification est contrôlée a posteriori avec les immatriculations des véhicules observés. Un équipement de fraude peut de plus être conçu pour être silencieux lors de ces contrôles, sa position étant publiée vers ces équipements par un service centralisé (information officielle pour les points fixes ou partagée par les utilisateurs, pour les points mobiles).

Différentes méthodes de contrôle de la cohérence des estimations de position existent. Cette cohérence peut être vérifiée en surveillant la puissance absolue ou relative des signaux GNSS ou par comparaison avec des sources secondaires comme des capteurs de mouvement, ou la mesure d'autres signaux radios.

La cohérence des mesures peut également être vérifiée en utilisant des techniques de tatouage numérique permettant notamment aux terminaux de localiser les émetteurs d'un réseau. Cette technique est souvent désignée par le mot anglais « watermarking ». Un exemple de mise en oeuvre du tatouage numérique est divulgué dans la demande de brevet WO 2009/037133.

Par ailleurs, la sécurisation des applications de localisation suppose des mesures connues de protection anti-manipulation (anti-tampering), sur la sécurisation des échanges, sur la protection des données provenant d'autres capteurs dans le véhicule.

De telles méthodes ne sont pas aujourd'hui implémentées dans les récepteurs commerciaux disponibles. Elles supposent pour certaines un coût important résultant d'un travail de reconception au niveau de la puce et/ou du logiciel pilote. En particulier reconcevoir la puce ou chip pour récepteurs grand public représente un coût et un délai importants. D'autres méthodes supposent l'ajout de capteurs dans l'équipement mobile : inertiels, par exemple tel que décrit dans la demande de brevet FR1000588 du Demandeur), mesure de signaux radiofréquences), ou information du réseau cellulaire, par exemple comme décrit dans la demande de brevet FR0807400 du Demandeur). Elles ne sont pas garanties et des attaques sophistiquées peuvent les contourner au moins partiellement.

L'idée mise en oeuvre par la présente invention, au contraire des approches existantes qui demandent en général l'ajout d'informations de position secondaires, ou un traitement du signal plus élaboré dans la réception GNSS, est notamment d'utiliser les informations fournies par les récepteurs, de type existant, sans nécessiter l'utilisation d'autre capteurs, dans le cas d'un fonctionnement normal du dispositif. Ce procédé est basé sur la collaboration entre récepteurs via une infrastructure centralisée, par exemple.

Aucune hypothèse n'est faite sur le fonctionnement préliminaire d'un récepteur en mode normal (non falsifié), mais on supposera que la proportion de récepteurs fraudeurs est suffisamment faible pour que des données statistiques puissent être construites, qui soient peu affectées par les éventuels dispositifs de leurrage.

Le récepteur embarqué sur un véhicule mobile collecte les informations de position GNSS et les transmet à un module d'authentification qui regroupe et consolide ces informations dans une base courante et historique, et calcule des indicateurs de confiance sur les trajectoires mesurées, d'où peut être estimée une probabilité de fraude, indicateurs qui sont basés sur:

- la qualité de signal reçu d'un satellite, dans une zone donnée : le rapport de densité signal/bruit ou C/N0 (carrier-to-noise density ratio), la valeur de l'erreur différentielle de distance à l'utilisateur plus connue sous l'abréviation anglo-saxonne UDRE (User Differential Range Error), ou la qualité de position globale: incertitude de position,
- la qualité de signal comparée à l'historique en ce lieu,
- l'azimut, l'élévation des satellites vus comparé à la cartographie historique, et/ou
- la cellule associée dans laquelle peut se trouver un récepteur dans un réseau de communication.

L'invention concerne un procédé pour authentifier la position $P_1(t)$ d'un élément mobile, un élément mobile comprenant au moins un récepteur GNSS, i, ayant une fonction d'estimer la position $P_1(t)$ de cet élément mobile, à partir de signaux dits « authentique » de la constellation GNSS, ledit récepteur étant potentiellement affecté par des signaux falsifiés, ce procédé étant **caractérisé en ce qu'**il comporte en combinaison au moins les étapes suivantes :

- déterminer au moins une donnée associée à la position $P_i$ d'un récepteur GNSS, i,
- transmettre et mémoriser ces données,
- choisir un échantillon spécifique $Ech(P_i)$ de données associées aux positions d'autres récepteurs, pertinent pour l'authentification de cette position $P_i$,
- agréger plusieurs données associées à la position de plusieurs récepteurs GNSS appartenant à un ensemble $Ech(P_i)$, sur une taille d'échantillon et une période de temps supérieur à des seuils donnés, afin d'obtenir une donnée statistique significative caractéristique du signal authentique,
- déterminer au moins un indicateur de cohérence $lc(P_i)$, représentant une évaluation de la vraisemblance de la position $P_i$, en comparant la donnéeassociée audit récepteur i et la donnée statistique ou données agrégées issue de l'ensemble $Ech(P_i)$ de récepteurs k sur un intervalle de temps contenant au moins une position Pi,
- authentifier la position $P_i$ dudit élément mobile en utilisant un ou plusieurs desdits indicateurs de cohérence $lc(P_i)$ dans une fonction de décision d'authenticité, ou lever une suspicion de fraude de la part de l'utilisateur de ce récepteur i, en ce qui concerne la position $P_i$.

Les étapes d'agrégation et de calcul d'indicateur sont réalisées dans un dispositif centralisé lié par un réseau de communication auxdits éléments mobiles.

Les étapes d'agrégation et de calcul d'indicateur sont, par exemple, réalisées au sein desdits éléments mobiles reliés entre eux et formant un réseau, suivant les principes du calcul distribué.

Selon une variante, pour authentifier la position $P_i(t)$ d'un élément mobile, l'indicateur de cohérence $lc(P_i)$ est calculé à partir de la puissance $S_k(n, t)$ de signal reçu par le récepteur k, en considérant les récepteurs k dans le voisinage du récepteur i, disposés à une distance inférieure à $\varepsilon$, à l'instant $(t_k)$, avec $t_k - t < \Delta t$, et $\Delta t$, $\varepsilon$ des paramètres dudit indicateur de cohérence, où n est le numéro de satellite en visibilité des récepteurs.

Selon une autre variante, pour authentifier la position $P_1(t)$ d'un élément mobile, suivant une mesure associé à un satellite n, dépendante à la fois de la position et de l'orientation relative du satellite, le procédé utilise un ensemble d'échantillons issus d'une base historique de positions, où la position $P_k$, d'un échantillon à l'instant t' et l'orientation du satellite n indiquée par le couple azimut, élévation $\alpha\theta(t',k)$ est suffisamment proche de $P_i(t)$ et $\alpha\theta(t,1)$.

Il est aussi possible pour authentifier la position $P_1(t)$ d'un élément mobile, suivant une mesure globale, portant sur tout les satellites vus, dépendante uniquement de la position, d'utiliser un ensemble d'échantillons d'une base de positions historique, dont la position $P_k$, à l'instant t' est suffisamment proche de $P_1(t)$.

L'étape d'agrégation de données comporte en combinaison, par exemple, au moins les étapes suivantes :

- la construction d'une carte de visibilité locale des satellites en chaque lieu défini typiquement par un intervalle de coordonnées dans un repère choisi, à partir de reports de positions des récepteurs k mémorisées dans une base de données,
- l'analyse du nuage de points extrait de la donnée statistique afin d'en déterminer la densité et la frontière,
- l'estimation de la probabilité de trouver un satellite n à une position $P_1$ en fonction de la direction : azimut $\alpha$, élévation $\theta$, pour une hypothèse sur l'incertitude de la direction $\xi$, à partir de la distance à ce nuage de points et de sa densité,

- et la combinaison à partir de ceux-ci, comme indicateur de cohérence, de la probabilité estimée $p(P_i, \{n\})$ que $\{n\}$ soit l'ensemble des satellites vus en $P_i$, où $\{n\}$ est l'ensemble des PRN de satellite visible reporté par le récepteur i.

Le procédé, sans supposer de position secondaire fournie par le réseau, construit indépendamment une table de cellules de réseau à partir des reports des positions historiques Xh mémorisées dans la base de données et d'information contingentes fournies par le réseau de communication telle que l'identité de cellule Cell-Id dans un réseau cellulaire mobile et en qu'il détermine comme indicateur de consistance entre la base de donnée et la position candidate $P_1$ une métrique de distance entre $P_1$ et les positions agrégées Xh et en ce qu'il utilise comme fonction d'authenticité la valeur de la probabilité que la cellule reportée pour le récepteur cible corresponde à la position $P_1$ et l'échantillon $E_{ch}$ ($P_1$) qui sert de référence est l'ensemble des positions enregistrées pour cette cellule.

Ledit procédé peut utiliser la mesure et décision d'authenticité en rétro-action sur la sélection de l'échantillon, afin d'améliorer la fiabilité du dispositif.

Selon une variante, le procédé utilise un mécanisme de filtrage des données excluant toute donnée passée et future concernant le terminal d'un utilisateur pour lequel au moins un soupçon de fraude est levé.

Le procédé peut aussi utiliser un mécanisme d'obsolescence où sont supprimées de la base les données dont l'exactitude et l'utilité sont diminuées par l'âge, en établissant des critères d'obsolescence adaptées à la donnée, lesdits critères étant choisis parmi la liste suivante:

- les données de qualité code, puissance, UDRE, sont supprimées lorsque le satellite n fait l'objet d'une notification par l'autorité de contrôle,
- les données de qualité globales, incertitude et disponibilité sont supprimées lorsque la constellation a été modifiée,
- les données de visibilité satellite sont supprimées lorsque la fréquence d'indicateur positif de leurrage sur le même lieu à $\varepsilon$ près est au dessus d'un seuil de vraisemblable observé,
- les données de cellule sont supprimées lorsque la fréquence d'indicateur positif de leurrage sur la même cellule est au dessus d'un seuil de vraisemblable observé,
- toute donnée est supprimée lorsqu'un âge limite est atteint,
- ou tout autre critère caractérisant l'obsolescence possible de la donnée.

Selon une variante, le procédé utilise un mécanisme de filtrage des données excluant toute donnée passée et future concernant un lieu sur lequel le taux de fausse alarme dépasse un seuil défini.

D'autres caractéristiques et avantages de la présente invention apparaîtront mieux à la lecture de la description d'un exemple donné à titre illustratif et nullement limitatif annexé des figures qui représentent :

- La figure 1, un exemple de système de localisation d'un dispositif mobile, tel qu'un véhicule, par satellite,
- La figure 2, un diagramme des différents éléments intervenant dans le procédé et le système selon l'invention,
- La figure 3, une illustration du voisinage spatio-temporelle d'un point $P_1$,
- La figure 4, une illustration de l'orientation satellite et du masquage a définition,
- La figure 5, une carte suivant azimut, élévation de visibilité en un point,
- La figure 6, la mesure de distance au nuage des satellites observés en un point,
- La figure 7, une illustration du voisinage spatial et orientation pour une observation satellite en un point $P_1$, et
- La figure 8, une représentation d'une topologie de reconstruction de cellule.

En résumé, de manière générique, le procédé selon l'invention pour authentifier la position GNSS d'un dispositif mobile sans avoir recours à une seconde source de position, et en utilisant l'architecture des récepteurs actuellement utilisés, consiste notamment à évaluer la cohérence temporelle et/ou la cohérence spatiale des informations de positionnement transférées entre plusieurs utilisateurs.

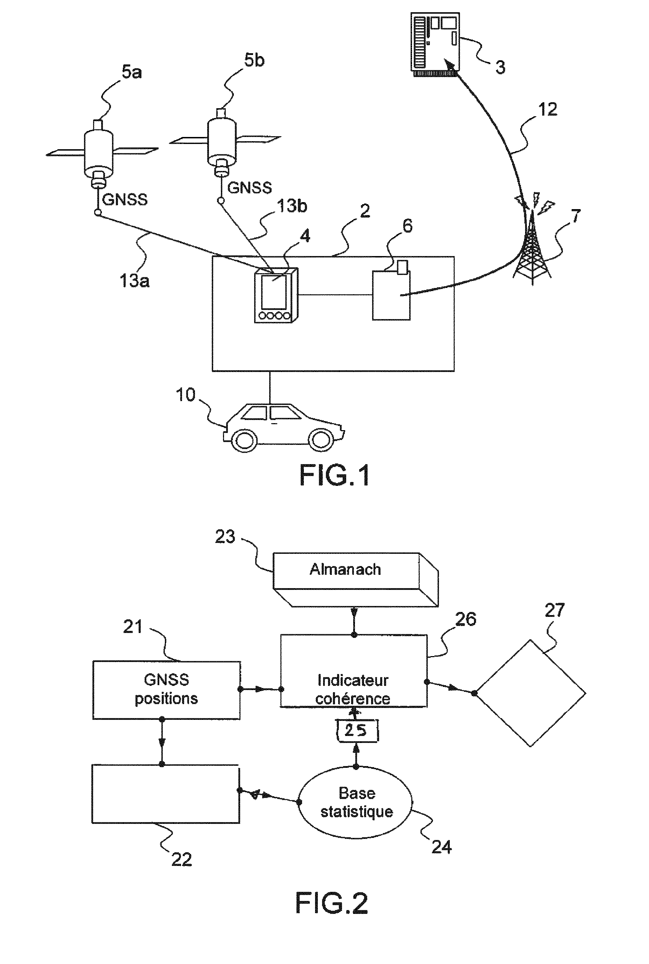

La figure 1 représente un exemple de localisation d'un élément mobile 10 par satellite, l'élément mobile pouvant être un véhicule. Le système de localisation comporte à bord du véhicule 10, un dispositif de localisation et de diffusion 2, dit "dispositif mobile", destiné à déterminer la position et/ou la vitesse d'un véhicule et à transmettre ces informations de localisation à un serveur de positions 3 chargé de les stocker et/ou de les exploiter. Le dispositif de localisation et de diffusion comporte un récepteur 4 de signaux de navigation GNSS (en anglais Global Navigation Satellite System) tels qu'un récepteur GPS (Global Positioning System), émis par une constellation de satellites 5a, 5b et un émetteur-récepteur 6 de communication mobile. Un réseau de communication 12 permet l'échange des informations entre les éléments via par exemple des relais 7.

Les informations de position sont calculées par le récepteur GNSS 4 au moyen de l'exploitation de signaux 13a et 13b émis par les satellites 5a, 5b selon des méthodes connues par l'Homme du métier.

La figure 2 schématise de manière simplifiée l'architecture du système d'authentification de position d'un dispositif mobile selon l'invention.

La trajectoire du récepteur GNSS k embarquée sur un dispositif mobile est composée d'une suite 21 de positions $P_k(t)$ GNSS, estimées à des instants t, auxquelles sont associées une incertitude en position $\Delta P$ et une incertitude en temps $\Delta t$. Le dispositif mobile est dit "fidèle" et les positions "authentiques" si les positions sont calculées à partir de signal "authentique", c'est à dire émis par la constellation GNSS. Le dispositif mobile est dit "fraudeur" et les positions "inauthentiques" dans le cas contraire.

Les données 21 relatives à une position $P_k$ d'un récepteur GNSS, k, seront par exemple transmises et mémorisées dans un dispositif centralisé, non représenté sur la figure pour des raisons de simplification, au sein d'une base de données 24, le dispositif centralisé sera lié par un réseau de communication aux éléments mobiles 10. Une autre façon de procédé est de mémoriser ces données au sein des éléments mobiles 10, lesdits éléments étant reliés entre eux et formant un réseau pour échanger de telles données, selon les principes du calcul distribué.

L'un des objectifs du système est, notamment, de déterminer l'authenticité de la position d'un récepteur GNSS en utilisant la collaboration entre récepteurs i via une infrastructure centralisée, par exemple le serveur de positions 3 (figure 1) qui permet la comparaison de données de positionnement récentes ou historiques fournies par les différents récepteurs utilisateur, sans identification, afin de garantir le respect de la vie privée. Il est aussi possible d'utiliser une infrastructure décentralisée en équipant chacun des récepteurs i de moyens adaptés pour exécuter les étapes du procédé selon l'invention.

L'échantillon $E_{ch}$ des données de référence associées aux récepteurs qui sont pris en compte pour déterminer l'authenticité est, par exemple, issu d'une base statistique 24 qui regroupe et consolide des données comme:

- la position, la vitesse, la direction, d'un dispositif mobile équipé d'un récepteur GNSS,
- le numéro de signal du satellite ou PRN (Pseudo Random Number), la valeur de l'erreur différentielle de distance à l'utilisateur ou UDRE (User Differential Range Error) et le rapport C/N0 (carrier-to-noise density ratio) des satellites visibles,

Le procédé selon l'invention va choisir un échantillon Ech pertinent de données, de positions d'autres récepteurs, par exemple, sur des critères comme la proximité dans l'espace et suivant le cas proximité orientation ou de proximité dans le temps.

Un almanach optionnel de la constellation de satellites, 23, fournit les couples (élévation, azimut) des satellites visibles a priori par un récepteur k. Les valeurs (élévation, azimut) sont soit calculées au besoin au fur et à mesure, soit stockées avec les autres données positions pour accélérer le calcul de l'indicateur comme il sera décrit ci-après. L'almanach 23 est utilisé pour déterminer les indicateurs de type qualité historique et de visibilité.

Un module de traitement 22 a notamment pour fonction d'exécuter un processus d'agrégation des données suivant des méthodes connues de l'homme du métier, en optimisant les calculs statistiques qui sont présentées ci-après pour chacun des indicateurs décrits ci-après. L'opération statistique sur cet échantillon extrait une moyenne (la somme de mesures sur $E_{ch}$ divisés par card($E_{ch}$)) ou la frontière d'un nuage de points (type d'indicateurs « carte de visibilité » et « carte de réseaux »). Le résultat de cette agrégation est une donnée statistique 25 peu affectée par les équipements fraudeurs, le nombre de ces équipements étant faible dans l'échantillon Ech. Cette mesure caractéristique du signal authentique et pertinente pour une position $P_1$, est considérée comme une référence autonome pour la position $P_1$.

Comme les formules suivantes le montre, le calcul des indicateurs, sans apport de technologie de positionnement secondaire, et sans période indemne d'attaques, ne se base sur aucune donnée prédéterminée, mais la référence émerge des données mémorisées. La capacité d'authentification apparaît après l'amorçage de la base de données, la qualité de cette référence étant croissante avec le temps écoulé depuis l'initialisation du dispositif et le nombre de récepteurs impliqués.

Le module de traitement 22 comporte, par exemple, au moins un mécanisme de filtrage alimenté par les résultats, qui modifie la constitution des échantillons, et a pour effet de diminuer la fréquence des résultats erronés.

La rétro-action dans le dispositif entre décision d'authenticité et sélection d'échantillon, réalise un apprentissage au sein du système formé par les récepteurs et le dispositif proposé. La rétro-action permet notamment d'améliorer la fiabilité du dispositif.

L'agrégation de données dans une base statistique 24 a notamment pour rôle de conserver de façon optimale des données cohérentes issues des signaux authentiques reçus par les récepteurs GNSS. L'initialisation de cette base 24 peut-être faite avec des données issues de terminaux connus comme fidèle, ou l'hypothèse est faite au départ d'une large majorité de terminaux fidèles. Trois mécanismes sont, par exemple, prévus pour agréger des données, visant à augmenter la robustesse du système aux erreurs présente dans les données collectées, et donc la performance de détection.

Un module 26 permet de déterminer des indicateurs de cohérence. Ce module 26 reçoit notamment les données de l'almanach 23, les valeurs de position GNSS et de la base 24.

Un module 27 a notamment pour fonction de détecter les données ou positions suspectes.

Le système comprend un mécanisme de filtrage par lequel sont exclues de la base 24, les données douteuses, sur la base des mécanismes de détection disponibles, notamment les données d'un utilisateur douteux (pour lequel il y a eu fraude avérée ou supposée). Ce filtre exclut de la base toute donnée passée et future concernant le terminal d'un utilisateur pour lequel au moins un soupçon de fraude est levé par la détection de leurrage, ou par tout autre moyen de vérification. Ce filtrage vise la qualité de la base utilisée en référence, afin de ne pas dépendre de la proportion d'utilisateurs honnêtes. Le mécanisme de filtrage est par exemple implémenté au niveau du module 22.

Un mécanisme de filtrage exclut de la base 24, les lieux sur lesquels la détection n'est pas fiable, afin de prévenir les fausses alarmes dues aux multi-trajets et environnements locaux très variables. Ce filtre exclut de la base toute donnée passée et future concernant un lieu sur lequel le taux de fausse alarme dépasse un seuil défini.

Un mécanisme d'Obsolescence permet de supprimer de la base 24, les données dont l'exactitude et l'utilité sont diminuées par l'âge, ceci en établissant des critères d'obsolescence adaptés à une donnée. Des exemples de critère sont donnés ci-dessous pour plusieurs types de données.

Le procédé met en jeu un ensemble de terminaux mobiles et connectés. Deux réalisations du procédé sont décrites: centralisée et distribuée.

On utilise, par exemple, une base de données centralisée dans un ou plusieurs serveurs accessibles depuis chaque récepteur, qui reçoivent les données de positionnement. La zone de service d'un serveur et de la base de données est déterminée dans une implémentation par un compromis entre coût et performance. Dans une implémentation typique, une base couvrira un pays ou une région.

Une réalisation alternative d'implémentation du procédé selon l'invention est d'utiliser une base de données distribuée entre plusieurs serveurs dans le réseau de communication, voire le partage de ces informations entre les équipements mobiles. La collaboration directe entre récepteurs peut-être basée sur des groupes dynamiques ad-hoc (un groupe étant défini par un rayon ou un nombre de terminaux).

Les modules 26 et 27 peuvent être réalisés soit dans un terminal GNSS soit dans un serveur central 3. Dans le cas d'une implémentation totalement décentralisée, chacun des récepteurs reconstruit les données nécessaires au calcul de l'indicateur en interagissant avec les récepteurs appartenant à l'échantillon, et évalue les critères de leurrage lui-même.

Ces variations concernent l'implémentation et non le principe du procédé, expliqué dans l'implémentation centralisée. Dans ce cas, les techniques "connues de l'homme du métier" en calcul distribué, services connus sous l'acronyme anglo-saxon « peer-to-peer » ainsi que le champ de science cognitive de la résolution collaborative (connu sous le terme anglo-saxon: Collaborative Problem Solving) s'appliquent afin de réaliser la fonction d'agrégation et le calcul d'indicateur à l'intérieur du dispositif mobile.

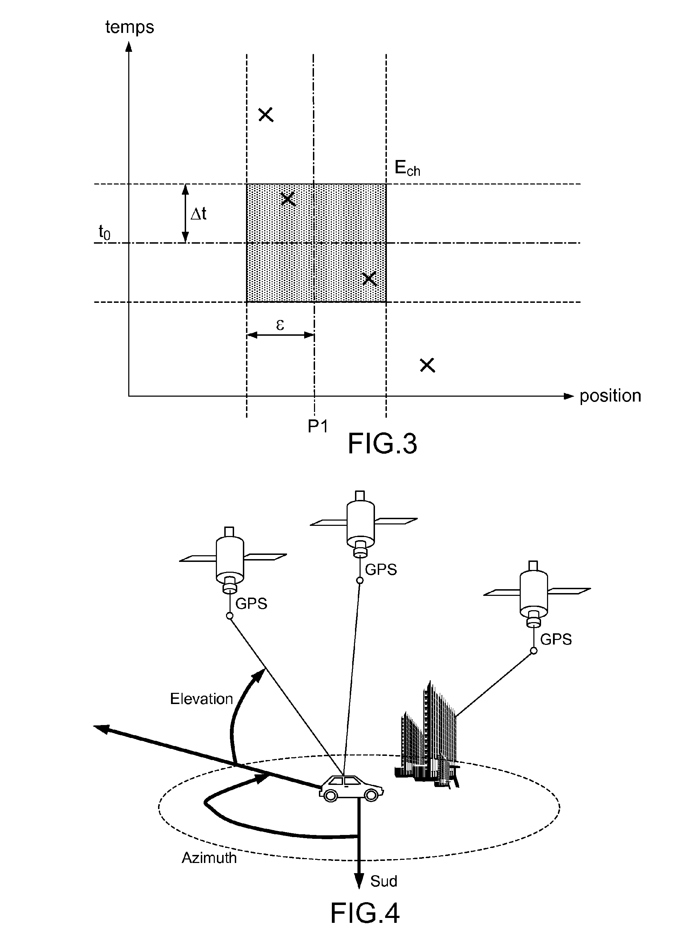

Les algorithmes utilisés permettent l'agrégation de données à l'échelle pertinente suivant la donnée consolidée. L'agrégation d'un nombre suffisant de positions, soit l'échantillon $E_{ch}$, illustré en figure 3, comme un voisinage du point $P_1$, augmente la confiance dans les mesures moyennes, tant que l'écart temporel et spatial (limité par $\Delta t$ et $\varepsilon$ respectivement) de ces positions n'entraine pas de dispersion de ces mesures. On notera que l'étape d'agrégation des données utilise des techniques statistiques "connues de l'homme du métier", pour optimiser la recherche dans la base et les calculs. Dans les formules présentées ci-dessous, on a choisi pour moyen d'agrégation ou agrégateur la somme de mesures sur $E_{ch}$ divisés par card($E_{ch}$). Pour optimiser la détection, cette valeur peut dans certains cas être pré-calculée, et stocké dans la base.

Le module de détection 27 des données ou positions suspectes, peut être identique à celui décrit dans son principe général par le brevet No FR11/00961, par exemple, qui estime un ou plusieurs indicateurs statistiques, module 26, notés $lc(P_i)$ ou $lc(n, P_i)$ où n correspond à un numéro de satellite, et $P_i$ à la position d'un récepteur i à un instant donné, à partir desquels il est possible de construire une fonction de décision sur l'authenticité de position d'un dispositif mobile ou d'un récepteur i monté sur le dispositif. A cet effet, il est possible d'utiliser typiquement une valeur logique vrai/faux, un estimateur de probabilité de fraude $p(P_i)$ ou des valeurs de possibilité/nécessité suivant la logique floue de Lofti Zadeh (Zadeh, L.A. (1965). "Fuzzy sets", Information and Control 8 (3): 338-353, Novák, V. "Are fuzzy sets a reasonable tool for modeling vague phenomena?", Fuzzy Sets and Systems 156 (2005) 341-348), cette valeur étant une représentation numérique d'un degré de confiance dans la position $P_k$ du récepteur k:

- drapeau logique $L(P_i) = lc(n, P_i) > T$, $\in \{0;1\}$, où T est un seuil choisi, ou
- estimateur de probabilité $p(P_i) = f(lc(n, P_i))$ où $f : [0; \infty[ \rightarrow [0; 1]$ est une fonction croissante qui normalise l'indicateur sur [0;1]. Cette fonction est choisie à partir de modèle ou d'expérimentation pour être un estimateur valable de la probabilité de fraude, ajusté à l'aide de paramètres.

Par exemple : $p(P_i) = 2/\pi * \arctan(\beta\ lc^m) \in [0;1]$ est continue et satisfait ces bornes.

Les valeurs de paramétrage sont, par exemple, la valeur seuil T > 0, ou les facteurs $\beta > 0$ et m > 0. Elles permettent le réglage de la décision suivant la distribution observée de l'indicateur utilisé sur des échantillons représentatifs de trajectoires réelles et de trajectoires falsifiées pour un dispositif mobile donné. $\beta$ est défini comme l'inverse de la valeur lc correspondant à une probabilité de confiance de ½. m permet de régler la « rampe » de la fonction.

p(P$_i$) étant la probabilité de leurrage ou en anglo-saxon « spoofing », le complémentaire 1-p(P$_i$) à cette valeur est une probabilité d'authenticité. Cette probabilité p(P$_i$) indicateur de confiance lc(n, P$_i$) est obtenue à partir d'un des indicateurs de cohérence ou indicateurs statistiques 26 ou une combinaison de certains de ces indicateurs en appliquant les méthodes connues de l'Homme du métier, celles décrites dans le brevet FR11/00961, ainsi que au moins un des 4 types d'indicateur originaux,: qualité temps réel, qualité historique, visibilité, réseau, décrits ci-après, exploitant la collaboration entre récepteurs.

Qualité du signal en temps réel

Une possibilité de mise en oeuvre de l'invention consiste à détecter le leurrage en utilisant un indice de qualité de signal, lorsqu'un appareil émet vers un récepteur GNSS des signaux GNSS générés ou transformés à partir de signaux authentiques (récepteur-régénérateurs). En effet, un tel dispositif émet un ensemble de signaux avec des délais de propagation à une localisation prétendue. Toutefois, ce « spoofing » ne peut imiter la qualité du signal qui est reçu à une localisation donnée. En effet, le dispositif de leurre ou "spoofing device" ne se trouve justement pas à cette position prétendue, de fait il ne peut sans une collaboration d'autres récepteurs être capable de reproduire la qualité du signal à cet endroit.

Les données de qualité de signal calculées pour un récepteur sont comparées aux données de qualité du signal reportées par les récepteurs les plus proches, puissance du signal, incertitude sur la position utilisateur, absence de position.

Une collaboration en temps réel est possible en tenant compte d'une population de récepteurs importante, ce qui est le cas du péage routier. Une alternative est d'effectuer une comparaison historique avec des données provenant des dispositifs coopératifs.

Ces caractéristiques de signaux GNSS (reçus par le serveur central dans l'exemple d'un service centralisé) sont gérées, par exemple, en collaboration temps réel :

- les numéros de satellite en poursuite par le récepteur (Tracked PRN) dépendent de la localisation, de l'instant, des obstacles, des multi-trajets,
- le rapport signal bruit (C/N0) pour chaque satellite (PRN) reçu, relatif au signal total, dépend des interférences, réflexions, et masquages (notamment par des feuillages).

**Rapport signal/bruit fréquentiel** (C/N0) **du signal**

L'idée mise en oeuvre par le procédé selon l'invention est, dans cet exemple de réalisation, de construire un indicateur comparant le C/N0, soit absolu, soit relatif (la valeur instantanée divisé par une valeur de référence choisie, comme la moyenne sur un intervalle donné) d'un signal reçu par un dispositif mobile à la moyenne de C/N0 d'un signal associé à d'autres récepteurs dans un échantillon temporel donné.

Soit S$_1$(n, t), le rapport C/N0 du signal reçu au niveau d'un premier récepteur 1, pour une localisation ou une position prétendue P$_1$(t). Cette valeur S$_1$(n, t) dépendant du récepteur, de l'antenne et de l'installation de celle-ci sur l'élément mobile, la méthode recommandée est d'utiliser une mesure relative pour s'abstraire des différences entre terminaux. S$_1$(n, t) est soumise à des variations aléatoires. Afin de minimiser le taux de fausses alarmes, l'indicateur lc$_s$ est exprimé en intégrant sur la durée de cet intervalle [t0; t1], contenant un nombre suffisant de mesures, ce C/N0 relatif, divisé par une valeur de référence choisie, et ce rapport étant comparé aux valeurs du C/N0 relatif des signaux reçus S$_k$(n, t), sur un échantillon E$_{ch}$(P$_1$) spécifique de récepteurs k. La position P$_k$ de chacun des récepteurs k est mémorisée dans la base de données 24 et le procédé va considérer les récepteurs k dans le voisinage du récepteur 1 disposé à une distance inférieure à ε, à l'instant (t$_k$), |t$_k$ - t| < Δt.

$$\text{Soit } E_{ch}(P_1) = \{k \quad telque \, d(P_k, P_1) < \varepsilon \quad et \quad |\,t_k - t\,| < \Delta t\} \qquad (0)$$

où d(P$_k$,P$_1$) est la distance entre deux positions ou localisation d'émetteur, et Δt, ε sont des paramètres pour le voisinage dans le temps et l'espace de la mesure P$_1$(t) à vérifier.

L'indicateur lc$_s$ du C/N0 du signal reçu par un récepteur k sur un intervalle de temps [t0;t1], s'exprime de la manière suivante :

$$Ic_S(n,P_1) = \int_{t_0}^{t_1} \left\| \frac{S_1(n,t)}{\dot{S}_1} - \frac{\sum_{E_{ch}} \frac{S_k(n,t_k)}{\dot{S}_k}}{card(E_{ch}(P_1))} \right\|^p , \quad (1)$$

avec $E_{ch}(P_1)$ défini en (0)
où la notation $\dot{S}_k$ (point au dessus de $S_k$) signifie une valeur de référence de $S_k$ comme la moyenne sur un échantillon temporel plus large que l'intervalle $[t_0;t_1]$, p étant choisie suivant des critères statistiques (p=1 combine les écarts en valeur absolue, et p=2 en quadratique) et n est le numéro d'un satellite en visibilité des récepteurs. La formule pour le C/N0 absolu est (1) avec $\dot{S}_1 = \dot{S}_k = 1$

Erreur Utilisateur

Selon une autre manière de procéder, il est possible de déterminer un indicateur basé sur des statistiques de mesures de qualité de ces signaux reçus par le récepteur k, comme l'erreur différentielle de distance à l'utilisateur (UDRE) par satellite PRN, inhérente au signal émis. L'incertitude sur la position, dépend outre ces erreurs de distance entre satellite et utilisateur, du nombre de satellites utilisés, de l'indicateur sur le positionnement de satellites plus connu sous l'abréviation anglo-saxonne DOP (Dilution of Precision), du retard de propagation dans l'ionosphère, et des puissances (C/N0). Un indicateur de cohérence est alors construit sur la base des UDRE :

$$Ic_U(n,P_1) = \int_{t_0}^{t_1} \left\| \frac{U_1(n,t)}{\dot{U}_1} - \frac{\sum_{E_{ch}} \frac{U_k(n,t_k)}{\dot{U}_k}}{card(E_{ch}(P_1))} \right\|^p \quad (2)$$

où $U_k(n,t_k)$, est la valeur UDRE calculée par le récepteur k au temps t, et la formule est similaire à la formule (1), comme la définition de $\dot{U}_k$, p et n où la notation $\dot{U}_k$ (point au dessus de $U_k$) signifie une valeur de référence de $U_k$.
L'absence de position GNSS, si l'on exclut les cas de mise en route du récepteur, ou de panne du récepteur lui-même est due notamment aux interférences, réflexions, et masquages. Typiquement, en trajet routier, de telles interruptions apparaissent en passant sous un pont ou dans un tunnel.
L'absence de position GNSS se traduit par une valeur logique $O_1(t)$, qui peut être comparée aux indisponibilités subies par d'autre utilisateur en utilisant un indicateur "global" déterminé de la manière suivante :

$$Ic_O(P_1) = \int_{t_0}^{t_1} \left\| O_1(t) - \frac{\sum_{E_{ch}} O_k(t_k)}{card(E_{ch}(P_1))} \right\|^p \quad (3)$$

On notera dans les formules (1)(2)(3), que les données sont comparés sur des temps t, $t_k$ très proches et l'échantillon $E_{ch}$ est défini en (0) par la distance instantanée des récepteurs.
Pour combiner ces indicateurs $Ic_S(n, P_1)$ ou $Ic_U(n, P_1)$ de qualité "code" (par satellite) en un seul indicateur "global", on applique ensuite une moyenne sur l'ensemble des satellites visibles suivant la formule:

$$Ic_S(P_1) = \sum_{VIS} Ic_S(n,P_1) \bigg/ card(VIS) ,$$

$$\text{ou } \text{Ic}_U(P_1) = \sum_{VIS} \text{Ic}_U(n, P_1) \Big/ card(VIS), \text{avec VIS} = \{n \text{ visibles}\} \quad (4)$$

## 2) L'historique de qualité du signal

Selon un autre mode de mise en oeuvre, il est possible de déterminer des indicateurs en utilisant des données historiques résultant d'une mémorisation de positions pour plusieurs utilisateurs ou récepteurs dans le temps. Ces données ont déjà été accumulées à proximité de la position $P_k$ d'un récepteur à vérifier. Ce procédé permet de baser le calcul sur un échantillon suffisant, lorsque l'échantillon instantané $E_{ch}$ est trop petit. Par contre, il impose de filtrer sur azimut et élévation, ce qui conditionne les mesures du signal d'un satellite, comme illustré en figure 4. On distinguera des mesures globales (portant sur tous les satellites vus, voir formules 5 et 6) ou des mesures pour un satellite à la même élévation et azimut par rapport à $P_k$ (formules 8 et 9).

Les mesures de qualité globales signal, utilisateur ou en anglo-saxon user et indisponibilité ($\text{Ic}_S$, $\text{Ic}_U$ et $\text{Ic}_O$) peuvent être associées à une position seule, sans relation au temps; ainsi, les indicateurs globaux utilisent la définition de l'échantillon $E_{ch}''(P_1) = \{k : d(P_k, P_1) < \varepsilon\}$.

Ainsi, l'indicateur historique d'incertitude utilisateur et l'ensemble des échantillons considérés sont

$$Ic_I(P_1) = \int_{t_0}^{t_1} \left\| \frac{I_1(t)}{\dot{I}_1} - \sum_{(t',k), \in E_{ch}''} \frac{I_k(t')}{\dot{I}_k} \Big/ card(E_{ch}''(P_1)) \right\|^p , \quad (5)$$

avec $E_{ch}''(P_1)$ défini ci-dessus

L'absence de réception GNSS étant spécifique de situation de masquage totale, on peut aussi définir directement l'indicateur global sans référence à l'orientation:

$$Ic_O(P_1) = \int_{t_0}^{t_1} \left\| O_1(t) - \frac{\sum\limits_{(t',k), \in E_{ch}''(P_1)} O_k(t')}{card(E_{ch}''(P_1))} \right\|^p , \quad (6)$$

avec $E_{ch}''(P_1)$ défini ci-dessus

Les données de qualité globales (incertitude et disponibilité) sont supprimées lorsque la constellation a été modifiée (retrait ou ajout d'un satellite).

Par contre les mesures sur un satellite PRN (UDRE, C/N0) sont obligatoirement associées à la position utilisateur et à l'orientation du satellite. De cette orientation du satellite, découlent la distance au satellite, les masquages, les réflexions en ce point, lesquelles de ce fait déterminent l'atténuation et le multi-trajet, et au final la puissance mesurée, et l'erreur de pseudo-distance.

Les données C/N0, UDRE sont initialement associées dans la base 24 à un récepteur k et à un instant t, et par dérivation à l'orientation satellite, donnée par les deux angles (azimut, élévation) au point reporté P(k), en calculant à partir de l'almanach 23 la position du satellite n à l'instant t.

Les données de qualité code (puissance, UDRE) sont supprimées lorsque le satellite n fait l'objet d'une notification par l'autorité de contrôle (appelé NANU).

Sur un satellite donné, l'ensemble $E_{ch}(P_1)$ des échantillons pris en compte pour le calcul des indicateurs ($\text{Ic}_s$, $\text{Ic}_u$, $\text{Ic}_o$) sur une mesure de puissance $W_1$ est défini en sus par une valeur limite $\xi$ à une fonction distance (comme maximum, euclidien) entre le couple d'angle $(\alpha, \theta)$ représentant les orientations de satellite du récepteur k et les angles pour le récepteur cible 1 :

$$E'_{ch}(P_1) = \{t', k : d(P_k(t'), P_1(t)) < \varepsilon \ \ et \ d((\alpha\theta(t,1)), (\alpha\theta(t',k)) < \xi\} \quad (7)$$

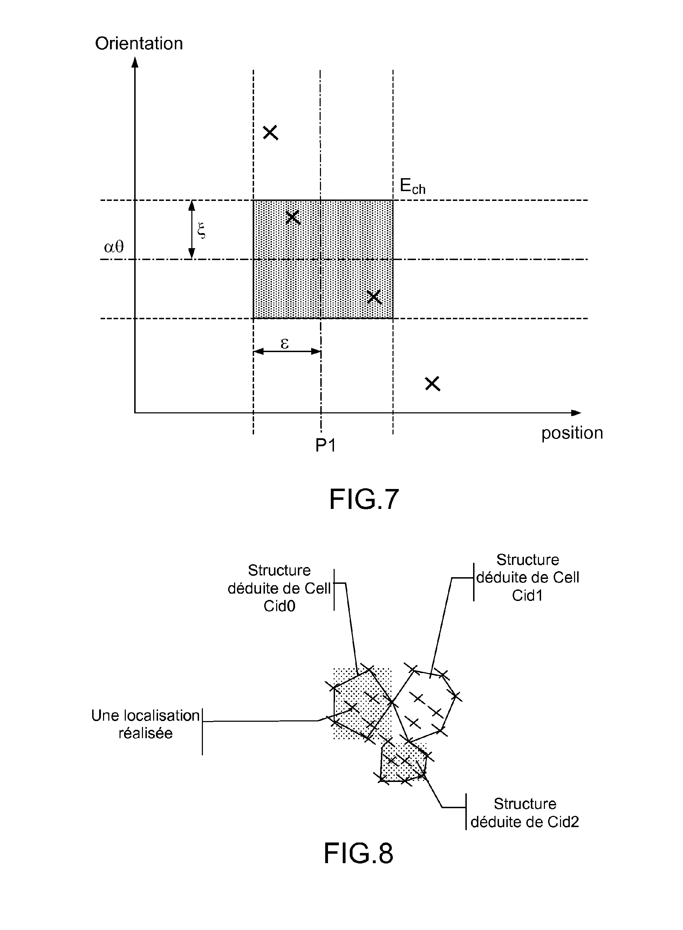

où $\alpha$ est l'azimut et $\theta$ l'élévation du satellite n pour l'utilisateur en $P_k$, à l'instant t', soit le couple $\alpha\theta$(t',k) et de même $\alpha\theta$ (t',k) pour la position vérifié $P_1$ à l'instant t. Ceci est illustré en figure 7 où chaque axe représente en fait deux dimensions.

En modifiant les formules (1)(2)(3) pour utiliser l'historique, les données sont comparées pour des instants t', et l'échantillon $E'_{ch}(P_1)$ est défini en position et temps, en sus de la distance des récepteurs par une distance angulaire d'orientation du satellite reçu. On obtient ainsi respectivement pour les indicateurs ($Ic_s$, $Ic_u$, $Ic_o$) les formules (4)(5)(6), dans lesquelles les données sont comparés sur un même temps t.

L'indicateur de cohérence basé sur la puissance de signal, et l'erreur de « pseudo-distance » deviennent respectivement:

$$Ic_S(n, P_1) = \int_{t_0}^{t_1} \left\| \frac{S_1(n,t)}{\dot{S}_1} - \frac{\sum_{(t',k),\in E'_{ch}(P_1)} \frac{S_k(n,t')}{\dot{S}_k}}{card(E'_{ch}(P_1))} \right\|^p , (8)$$

avec $E'_{ch}(P_1)$ défini ci-dessus,
avec t' un temps variable sur lequel sont effectuées les mesures,

$$Ic_U(n, P_1) = \int_{t_0}^{t_1} \left\| \frac{U_1(n,t)}{\dot{U}_1} - \frac{\sum_{(t',k),\in E'_{ch}(P_1)} \frac{U_k(n,t')}{\dot{U}_k}}{card(E'_{ch}(P_1))} \right\|^p , (9)$$

avec $E'_{ch}(P_1)$ défini ci-dessus

Ces indicateurs peuvent être consolidés pour chaque satellite observé, comme donné par les formules (4).

### 3) La carte Historique de Visibility (azimuth, elevation)

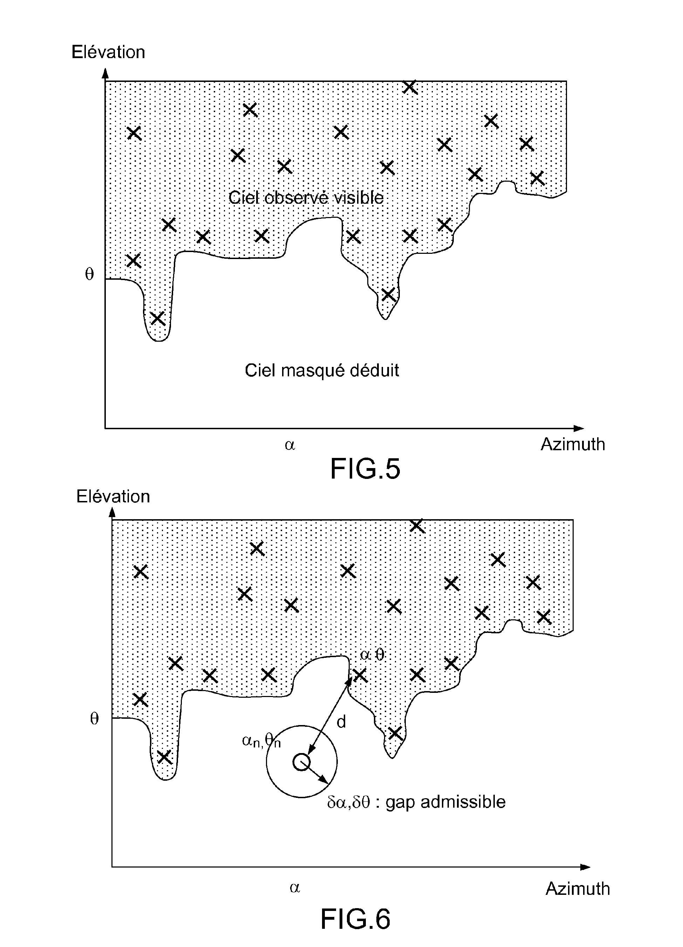

Un autre indicateur de cohérence 26 est basé sur la visibilité de satellites. Pour ceci, l'étape d'agrégation 22, implique de construire une carte de visibilité des satellites à partir des reports de position historique, en chaque lieu défini typiquement par un intervalle de coordonnées dans un repère choisi, sachant que la visibilité est déterminée principalement par des obstacles fixes tels que des montages, des immeubles et une densité de feuilles ou de forêts. Ainsi, l'orientation possible des satellites visibles est une enveloppe de toutes les occurrences reçues par tout récepteur dans une position donnée, illustrée en figure 6.

Cette visibilité constatée étant très variable en zone urbaine, montagneuse ou végétalisée, est une mesure discriminante par rapport à la position réelle. Par contre, la visibilité suivant l'almanach peut être identique sur des centaines de km. La méthode de construction statistique d'une telle carte de visibilité présente donc un avantage décisif de pertinence comme critère de détection de leurrage par rapport à l'utilisation d'almanach, et d'autre part un avantage économique par rapport à d'autres méthodes de prévision de la visibilité.

Un indicateur de cohérence est défini entre la carte de visibilité et chaque satellite reporté comme étant visible ou non en fonction de la position d'un candidat ou d'un récepteur. La réalisation de référence pour ce principe est de calculer la probabilité estimée E(n, $P_k$) de vue du satellite n en un point $P_k$, sous l'orientation ($\alpha$, $\theta$), à partir de la forme négative de la figure 6, extraite du nuage des satellites d'orientation ($\alpha$, $\theta$) vus en cet endroit $P_k$ à $\varepsilon$ près, les observations étant stockées dans la base historique H. L'appartenance d'une observation en un point Y , sous l'orientation ($\beta$, p), à ce nuage, est définie suivant une mesure de distance dans un système de coordonnées choisi (par exemple $Max_i$ ($x_i$-$y_i$) < $\varepsilon$ ou $x_i$, resp $y_i$ étant les coordonnées (latitude,longitude,altitude) dans le repère WGS84 (World Geodetic System - 1984) pour les positions $P_1$ et Y), et de manière similaire un écart entre ($\alpha$, $\theta$) et ($\beta$,$\rho$).

La probabilité de vue est estimée comme une fonction de la distance à l'intérieur ou à l'extérieur de ce nuage, et de la densité du nuage. Plus le nuage est dense à l'intérieur, et vide à l'extérieur, plus la fonction peut être "raide" car la connaissance de la visibilité est non ambiguë. Par contre, l'apparition d'orientations dispersées serait un signe de conditions locales (masquages partiels ou temporaires, ou de multi-trajets), qui rendent l'indicateur moins certain. Afin d'augmenter la robustesse de détection à ces conditions, les données de visibilité satellite sont supprimées lorsque la fréquence d'indicateur positif (de leurrage) sur le même lieu (à ε près) est au dessus d'un seuil vraisemblable observé (filtre d'environnement décrit ci-dessus).

La probabilité estimée de trouver un satellite n à une position $P_1$ en fonction de la direction $\alpha_n$, $\theta_n$, (azimut, élévation) donnée par l'almanach, pour une hypothèse sur l'incertitude de la direction $\xi$, est obtenue par la formule suivante :

$$E(n,P_1) = E(\alpha_n, \theta_n, \text{connaissant } P_1) = 1 - \frac{Min(d(\alpha,\theta,\alpha_n,\theta_n),(Xh,\alpha,\theta) \in H, d(P_1,Xh) \leq \varepsilon)}{\partial\alpha,\partial\theta}$$

(10)

où $(\alpha, \theta)$ sont des observations de satellites associé à une position historique Xh et $(\delta\alpha, \delta\alpha)$ les écarts admissibles définie par le nuage des observations.

L'indicateur statistique déduit de ces estimations est donc la probabilité estimée $p(P_i, \{n\})$ combinant la probabilité pour chaque satellite PRN n, par une méthode connue, typiquement

$$P(P_i, \{n\}) = \frac{\sum_{s \in \{n\}} E(s,P_i) + \sum_{s \notin \{n\}} 1 - E(s,P_i)}{Nsat}$$

(11) avec $N_{sat} = \text{card}(\{n\})$, où $\{n\}$ est l'ensemble des numéros de satellite visible reporté par le récepteur cible.

#### 4) La carte Historique de réseau (Position, Cell)

La figure 8 schématise une autre façon de procéder consistant à construire une table de cellules de réseau à partir des reports des positions historiques Xh d'un récepteur i=1 dans une cellule, et d'informations contingentes fournies par le réseau ce communication, lors du report des positions par le dispositif mobile, puis d'utiliser ladite table de cellules pour vérifier les positions reportées par le récepteur cible. Le principe est illustré avec l'identité de cellule Cell-Id dans un réseau cellulaire mobile obtenue par le réseau de communication selon une méthode connue de l'Homme du métier. La constitution collaborative de cette table de correspondance cellules et positions présente un avantage économique par rapport à l'utilisation de données réseaux existante comme critère d'authentification.

L'indicateur de consistance entre la base de donnée et la position candidate $P_1$ est une métrique de distance $d(P_i, Xh)$ entre $P_1$ et les positions agrégées Xh dans la base de donnée H.

La probabilité que la cellule $C_{id}$ reportée pour le récepteur cible i=1 corresponde à la position reportée $P_1$ est calculée à partir des positions proches mémorisé dans la base, soit: p(cellule = $C_{id}$, knowing

$$p(\text{cellule} = C_{id}, \text{knowing } P_1) = \frac{\sum_{(Xh,C_{id}) \in H} d(P_1,Xh)}{\sum_{(Xh,C_{id}') \in H} d(P_1,Xh)}$$

(11)

où ce dénominateur n'est calculé qu'une fois pour la base complète (soit pour tous les $C_{id}'$), et l'échantillon $E_{ch}(P_1)$ qui sert de référence est l'ensemble des positions d'un récepteur k enregistrées pour cette cellule. L'apprentissage du domaine de chaque cellule par la base 24 est illustrée en figure 8.

On notera que ce procédé utilise le Cell-Id comme une étiquette associé aux positions GNSS lors de l'agrégation, et ne nécessite pas de position secondaire par une méthode de type "réseau". Il diffère en cela de la comparaison de la position GNSS avec la vraie position réseau, déjà décrite dans le brevet FR0807400.

La suppression de données obsolète peut être déclenchée lorsque plusieurs alarmes traduisant une possibilité de fraude dans la valeur de la position transmise sont levées sur la même cellule dans un temps court, (au dessus d'un seuil vraisemblable), qui mettent en cause la validité de ces données, ou simplement après un âge fixé. Les données étant mémorisées en permanence, il subsiste suffisamment de données valides pour la vérification.

L'agrégation des données à des fins statistiques comporte des techniques "connues de l'homme du métier", pour optimiser l'espace de stockage et la recherche dans la base et les calculs statistique dans les indicateurs. Par exemple les sommes de mesures divisés par card(E) sont des agrégateurs des données (k,t) sur un sous-ensemble de la base, qui peuvent dans certains cas être pré-calculés. Des données très proches peuvent être remplacées dans la base par une donnée moyenne, sans modifier substantiellement le principe exposé.

Il est à noter, qu'il faut gérer dans cette base, l'obsolescence des données, la pertinence des mesures observées pouvant être remise en cause par des modifications de l'environnement. Par exemple, la couverture d'une cellule est modifiée avec l'évolution de la topologie du réseau.

Le procédé et le système selon l'invention permettent d'éviter des mécanismes de fraude subtils qui tenteraient d'éviter les évènements déclencheurs de la tarification routière (zones ou portail virtuel) ou à des attaques visant la sécurité de biens ou de personnes.

La solution devrait permettre un fort pourcentage de détection de fraude, même subtiles, à partir d'un équipement matériel de faible coût. Aucun ajout ou modification n'est nécessaire sur le récepteur GPS existant. Elle fournit des informations incriminantes pouvant éventuellement servir de preuve.

Enfin, l'usage de ces critères hors contexte de péage à l'usage permet aussi d'améliorer l'intégrité en zone urbaines

La collaboration des utilisateurs en majorité "non fraudeurs" (terminaux fidèles au signal authentique de navigation) permet de détecter les utilisateurs "fraudeurs" qui reportent des informations incohérentes à ce signal, ceci sans capteur supplémentaire dans l'équipement mobile, et également sans évolution du récepteur GPS.

## Revendications

1. Procédé pour authentifier la position $P_1(t)$ d'un élément mobile (10), un élément mobile comprenant au moins un récepteur GNSS, i, ayant une fonction d'estimer la position $P_1(t)$ de cet élément mobile (10), à partir de signaux dits « authentique » de la constellation GNSS, ledit récepteur étant potentiellement affecté par des signaux falsifiés, ce procédé étant **caractérisé en ce qu'**il comporte en combinaison au moins les étapes suivantes :

   • déterminer au moins une donnée (21) associée à la position $P_i$ d'un récepteur GNSS, i,
   • transmettre et mémoriser ces données (21),
   • choisir un échantillon spécifique $Ech(P_i)$ de données associées aux positions d'autres récepteurs, pertinent pour l'authentification de cette position $P_i$,
   • agréger plusieurs données (22) associées à la position de plusieurs récepteurs GNSS appartenant à un ensemble $Ech(P_i)$, sur une taille d'échantillon et une période de temps supérieur à des seuils donnés, afin d'obtenir une donnée statistique significative (25) caractéristique du signal authentique,
   • déterminer au moins un indicateur de cohérence $Ic(P_i)$, (26), représentant une évaluation de la vraisemblance de la position $P_i$, en comparant la donnée (21) associée audit récepteur i et la donnée statistique (25) issue de l'ensemble $Ech(P_i)$ de récepteurs k sur un intervalle de temps contenant au moins une position Pi,
   • authentifier (27) la position $P_i$ dudit élément mobile (10) en utilisant un ou plusieurs desdits indicateurs de cohérence $Ic(P_i)$ dans une fonction de décision d'authenticité, ou lever une suspicion de fraude de la part de l'utilisateur de ce récepteur i, en ce qui concerne la position $P_i$.

2. Procédé selon la revendication 1 **caractérisé en ce que** les étapes d'agrégation et de calcul d'indicateur sont réalisées dans un dispositif centralisé lié par un réseau de communication auxdits éléments mobiles (10).

3. Procédé selon la revendication 1 **caractérisé en ce que** les étapes d'agrégation et de calcul d'indicateur sont réalisées au sein desdits éléments mobiles (10) reliés entre eux et formant un réseau, suivant les principes du calcul distribué.

4. Procédé selon la revendication 1, 2 ou 3 **caractérisé en ce que** pour authentifier la position $P_1(t)$ d'un élément mobile (10), l'indicateur de cohérence $Ic(P_1)$ est calculé à partir de la puissance $S_k(n, t)$ de signal reçu par le récepteur k, en considérant les récepteurs k dans le voisinage du récepteur 1, disposés à une distance inférieure à $\varepsilon$, à l'instant $(t_k)$, avec $t_k - t < \Delta t$, et $\Delta t$, $\varepsilon$ des paramètres dudit indicateur de cohérence, où n est le numéro de satellite en visibilité des récepteurs.

5. Procédé selon la revendication 1, 2 ou 3 **caractérisé en ce que** pour authentifier la position $P_1(t)$ d'un élément mobile, suivant une mesure associé à un satellite n, dépendante à la fois de la position et de l'orientation relative du satellite, le procédé utilise un ensemble d'échantillons issus d'une base historique de positions, où la position $P_k$, d'un échantillon à l'instant t' et l'orientation du satellite n indiquée par le couple azimut, élévation $\alpha\theta(t',k)$ est suffisamment proche de $P_1(t)$ et $\alpha\theta(t,1)$.

6. Procédé selon la revendication 1, 2 ou 3 **caractérisé en ce que** pour authentifier la position $P_1(t)$ d'un élément mobile, suivant une mesure globale, portant sur tout les satellites vus, dépendante uniquement de la position, le procédé utilise un ensemble d'échantillons d'une base de positions historique, dont la position $P_k$, à l'instant t' est suffisamment proche de $P_1(t)$.

7. Procédé selon l'une des revendications 1, 2 ou 3 **caractérisé en ce que** l'étape d'agrégation de données comporte en combinaison au moins les étapes suivantes :

   • la construction d'une carte de visibilité locale des satellites en chaque lieu défini typiquement par un intervalle de coordonnées dans un repère choisi, à partir de reports de positions des récepteurs k mémorisées dans une base de données (24),
   • l'analyse du nuage de points extrait de la donnée statistique (25) afin d'en déterminer la densité et la frontière,
   • l'estimation de la probabilité de trouver un satellite n à une position $P_1$ en fonction de la direction azimut $\alpha$, élévation $\theta$, pour une hypothèse sur l'incertitude de la direction $\xi$, à partir de la distance à ce nuage de points et de sa densité,
   • et la combinaison de ces estimations, comme indicateur de cohérence, de la probabilité estimée $p(P_i, \{n\})$ que précisément cet ensemble $\{n\}$ soit visible en $P_i$, où $\{n\}$ est l'ensemble des numéros de satellite visible reporté par le récepteur i.

8. Procédé selon l'une des revendications 1, 2 ou 3 **caractérisé en ce que** ledit procédé, sans supposer de position secondaire fournie par le réseau, construit indépendamment une table de cellules de réseau à partir des reports des positions historiques Xh mémorisées dans la base de données (24) et d'information contingentes fournies par le réseau de communication telle que l'identité de cellule Cell-Id dans un réseau cellulaire mobile et en qu'il détermine comme indicateur de consistance entre la base de donnée et la position candidate $P_1$ une métrique de distance entre $P_1$ et les positions agrégées Xh et **en ce qu'**il utilise comme fonction d'authenticité la valeur de la probabilité que la cellule reportée pour le récepteur cible corresponde à la position $P_1$ et l'échantillon $E_{ch}(P_1)$ qui sert de référence est l'ensemble des positions enregistrées pour cette cellule.

9. Procédé selon l'une des revendications 1, 2 ou 3 **caractérisé en ce que** ledit procédé utilise la mesure et décision d'authenticité en rétro-action sur la sélection de l'échantillon.

10. Procédé selon la revendication 1 **caractérisé en ce qu'**il utilise un mécanisme de filtrage des données excluant toute donnée passée et future concernant le terminal d'un utilisateur pour lequel au moins un soupçon de fraude est levé.

11. Procédé selon la revendication 1 **caractérisé en ce qu'**il utilise un mécanisme d'obsolescence où sont supprimées de la base (24) les données dont l'exactitude et l'utilité sont diminuées par l'âge, en établissant des critères d'obsolescence adaptées à la donnée, lesdits critères étant choisis parmi la liste suivante:

   • les données de qualité code, puissance, UDRE, sont supprimées lorsque le satellite n fait l'objet d'une notification par l'autorité de contrôle,
   • les données de qualité globales, incertitude et disponibilité sont supprimées lorsque la constellation a été modifiée,
   • les données de visibilité satellite sont supprimées lorsque la fréquence d'indicateur positif de leurrage sur le même lieu à $\varepsilon$ près est au dessus d'un seuil de vraisemblable observé,
   • les données de cellule sont supprimées lorsque la fréquence d'indicateur positif de leurrage sur la même cellule est au dessus d'un seuil de vraisemblable observé,
   • toute donnée est supprimée lorsqu'un âge limite est atteint,
   • ou tout autre critère caractérisant l'obsolescence possible de la donnée.

12. Procédé selon la revendication 1 **caractérisé en ce qu'**il utilise un mécanisme de filtrage des données excluant toute donnée passée et future concernant un lieu sur lequel le taux de fausse alarme dépasse un seuil défini.

FIG.1

FIG.2

FIG.3

FIG.4

**FIG.5**

**FIG.6**

Orientation

FIG.7

FIG.8

**EP 2 562 560 A1**

Europäisches
Patentamt

European
Patent Office

Office européen
des brevets

# RAPPORT DE RECHERCHE EUROPEENNE

Numéro de la demande

EP 12 18 1743

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2010/117899 A1 (PAPADIMITRATOS PANAGIOTIS [CH] ET AL) 13 mai 2010 (2010-05-13) | 1-4,6, 8-12 | INV. G01S19/21 G01S19/08 |
| Y | * alinéa [0006] - alinéa [0021] * * alinéa [0040] * * alinéa [0050] - alinéa [0051] * * alinéa [0069] * * alinéa [0075] * * alinéa [0081] - alinéa [0092] * | 5,7 | |
| Y | JON S WARNER ET AL: "GPS Spoofing Countermeasures", INTERNET CITATION, 1 décembre 2003 (2003-12-01), XP007914429, Extrait de l'Internet: URL:http://www.homelandsecurity.org/bulletin/dual%20benefit/warner_gps_spoofing.html [extrait le 2010-08-13] * pages 4-5, section "Countermeasures" * | 5,7 | |
| X,P | Y. BARDOUT: "Authentication of GNSS Position: An Assessment of Spoofing Detection Methods", PROCEEDINGS OF ION GNSS 2011, 19 septembre 2011 (2011-09-19), pages 436-446, XP55039186, Portland, OR, USA * le document en entier * | 1-12 | DOMAINES TECHNIQUES RECHERCHES (IPC) G01S |
| X,P | US 2011/227787 A1 (GUM ARNOLD J [US] ET AL) 22 septembre 2011 (2011-09-22) * le document en entier * | 1-12 | |

-/--

Le présent rapport a été établi pour toutes les revendications

| Lieu de la recherche | Date d'achèvement de la recherche | Examinateur |
|---|---|---|
| Munich | 28 septembre 2012 | Hekmat, Taymoor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

18

Europäisches Patentamt
European Patent Office
Office européen des brevets

**RAPPORT DE RECHERCHE EUROPEENNE**

Numéro de la demande

EP 12 18 1743

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SCOTT L: "Anti-Spoofing & Authenticated Signal Architectures for Civil Navigation Systems", PROCEEDINGS OF ION GPS/GNSS, XX, XX, vol. 2003, 1 janvier 2003 (2003-01-01), pages 1543-1552, XP002436415, * page 1546, section "Antispoof Recievers : The Current State of Affairs" * ----- | 1-12 | |
| A | US 2009/195443 A1 (LEVIN PETER [US] ET AL) 6 août 2009 (2009-08-06) * figure 4 * * alinéa [0034] - alinéa [0060] * ----- | 1-12 | |
| A | GB 2 358 977 A (MOTOROLA INC [US]) 8 août 2001 (2001-08-08) * le document en entier * ----- | 1-12 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 28 septembre 2012 | Hekmat, Taymoor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 18 1743

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-09-2012

| Document brevet cité au rapport de recherche | Date de publication | Membre(s) de la famille de brevet(s) | Date de publication |
|---|---|---|---|
| US 2010117899 A1 | 13-05-2010 | AUCUN | |
| US 2011227787 A1 | 22-09-2011 | US 2011227787 A1<br>WO 2011119640 A1 | 22-09-2011<br>29-09-2011 |
| US 2009195443 A1 | 06-08-2009 | AUCUN | |
| GB 2358977 A | 08-08-2001 | AR 028879 A1<br>BR 0100043 A<br>CN 1304270 A<br>GB 2358977 A<br>GB 2360657 A<br>MX PA00011100 A<br>US 6429808 B1<br>US 2003011511 A1 | 28-05-2003<br>21-08-2001<br>18-07-2001<br>08-08-2001<br>26-09-2001<br>06-06-2003<br>06-08-2002<br>16-01-2003 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009037133 A
- FR 1000588
- FR 0807400
- FR 1100961

**Littérature non-brevet citée dans la description**

- **ZADEH, L.A.** Fuzzy sets. *Information and Control,* 1965, vol. 8 (3), 338-353
- **NOVÁK, V.** Are fuzzy sets a reasonable tool for modeling vague phenomena?. *Fuzzy Sets and Systems,* 2005, vol. 156, 341-348